# EUROPEAN PATENT APPLICATION

(11) **EP 2 148 456 A1**
(43) Date of publication of application: **27.01.2010**
(21) Application number: 08252539.5
(22) Date of filing: 25.07.2008
(51) Int. Cl.: H04B 10/12, H01Q 3/26

(54) **Multi-funcition array antenna**

(71) Applicant: BAE Systems plc, London SW1Y 5AD (GB)
(72) Inventor: The designation of the inventor has not yet been filed
(74) Representative: BAE SYSTEMS plc Group IP Department

(57) **Abstract**

An optical routing network provides function-specific routing, in the optical domain, of radio frequency (RF) signals between inputs to the network and function-specific outputs from the network. RF signals input to the network may comprise signals received by elements of a multi-function array antenna for routing to function-specific receiving equipment or signals from function-specific transmitting equipment for routing to selected elements of the antenna for transmission. The optical routing path through the optical routing network is chosen by selecting one or more predetermined optical carrier wavelengths in the optical routing network, each carrier wavelength being associated with a particular function of the antenna. The optical routing network comprises optoelectronic modulators for modulating the selected optical carrier or carriers with received radio frequency (RF) signals and wavelength division multiplexing (WDM) devices for separating and directing modulated carriers to respective optical outputs according to the selected carrier wavelengths. However, if routing in respect of only one function is required at any one time, a single carrier wavelength may be used and optical switches may be used in place of WDM devices to achieve the required optical routing on a time division basis, if preferred.

## Description

This invention relates to multi-function array antennas and in particular, but not exclusively, to an optical routing network for selectively routing signals between elements of the array antenna and function-specific equipment.

There is a need for a microwave array antenna able to support multiple functions, sometimes simultaneously, and for means to make an adjustable or scalable selection of antenna elements of the array to operate with particular functions.

From a first aspect, the present invention resides in an optical routing network for a multi-function antenna, comprising:
at least one input for receiving radio frequency (RF) signals;
modulation means comprising at least one opto-electronic modulator linked to the at least one input;
an optical driver linked to the modulation means for generating an optical carrier signal comprising light of one or more of a plurality of different selectable wavelengths; and
optical routing means for receiving modulated optical carrier signals output by the modulation means and for directing modulated light in the modulated signals to one of a plurality of function-specific optical outputs.

In a preferred embodiment, the optical routing means comprise wavelength division demultiplexing means for separately directing modulated light in the modulated optical carrier signals to a different one of the plurality of function-specific optical outputs for each of the one or more selectable wavelengths of light comprised in the optical carrier signal.

In a typical implementation, a number of the inputs to the optical routing network are provided, each linked to a respective opto-electronic modulator for modulating the optical carrier signal using RF signals received at the input. An eight or sixteen input (channel) optical routing network may be a typical implementation of the present invention. In such a multi-input arrangement the wavelength division demultiplexing means comprise a plurality of wavelength division demultiplexers, each linked to a respective one of the opto-electronic modulators and each having a plurality of function-specific optical outputs. Wavelength division multiplexing and demultiplexing enables a multi-frequency optical carrier signal to be generated and, following modulation, separated into its constituent modulated carriers of the selected wavelength(s) and routed according to wavelength using only passive devices.

An advantage in using the preferred passive devices for optical routing is reinforced by the preferred use of an optical driver comprising a plurality of switchable lasers each arranged to output light of a different one of the plurality of selectable wavelengths, each wavelength being associated with a different function of the antenna, and combining means for combining light from two or more of the plurality of lasers to form the optical carrier signal. In this way, function-specific routing of received RF signals may be performed entirely by switching the different lasers on or off or by using optical switches to select light from one or more of the lasers. Multiple functions may be served simultaneously by switching on more than one laser at the same time in the knowledge that each of the different modulated carriers will be routed automatically to the respective functional receivers by the optical routing devices. Laser switching may be performed rapidly, in time periods of the order of 10-100µs, to enable rapid switching or sampling of antenna functions.

The optical routing network according to this first aspect of the present invention may be applied either to the receiving functions of an array antenna or to the transmitting functions of an antenna. For the receiving functions, a different antenna element or group of antenna elements of the array antenna is linked to each input to the routing network so that signals received by those antenna elements may be routed to different function-specific outputs of the network by selecting different respective optical carrier wavelengths. For the transmitting functions, the inputs to the routing network receive signals from function-specific transmitting equipment and the outputs are linked to specific antenna elements or groups of antenna elements of the array antenna. Signals received at the inputs may be routed to specific outputs and hence to specific elements of the array antenna for transmission by selecting different respective carrier wavelengths in the routing network.

An alternative source of light for generating optical carrier signals is provided by a single tuneable laser operable to output light at one of the plurality of selectable wavelengths to form the optical carrier signal. However, a single tuneable laser is capable of providing light of only one wavelength at a time and hence for use in routing RF signals to receivers in respect of only one function at a time. In such an arrangement, optical routing may be performed by optical routing means comprising a plurality of optical switches, each linked to a respective one of the opto-electronic modulators and each having a plurality of optical outputs, wherein each optical switch is arranged to direct received modulated optical signals to a selectable one of the plurality of optical outputs.

From a second aspect, the present invention resides in a method for routing RF signals between elements of a multi-function array antenna and function-specific equipment in respect of transmitting or receiving functions of the antenna, comprising the steps of:
(i) generating an optical carrier using light of one or more selectable wavelengths;
(ii) modulating the optical carrier with a received RF signal; and
(iii) routing modulated light in the modulated optical carrier to one or more function-specific outputs according to the selected wavelength, wherein each output relates to a different function of the antenna.

In a preferred embodiment according to this second aspect, at step (i), the optical carrier comprises light of a plurality of selected wavelengths combined to form the optical carrier using wavelength division multiplexing and, at step (iii), the modulated optical carrier is separated into modulated carriers at each of the plurality of selected wavelengths for routing to respective function-specific outputs using wavelength division demultiplexing.

In a preferred application of the method, the RF signals comprise signals received by elements of the array antenna and the function-specific outputs are linked to function-specific receiving equipment. Alternatively, the RF signals comprise signals output by function-specific transmitting equipment and the function-specific outputs are linked to elements of the array antenna.

From a third aspect, the present invention resides in a multi-function array antenna having an optical routing network according to the first aspect of the present invention, for directing RF signals received from elements of the antenna to function-specific outputs, wherein, in operation, RF signals are routed to one or more of the function-specific outputs according to which of the of selectable optical carrier signal wavelengths is enabled in the optical routing network.

From a fourth aspect, the present invention resides in a multi-function array antenna having an optical routing network according to the first aspect of the present invention, for directing RF signals received from function-specific transmitting equipment to function-specific outputs linked to elements of the antenna, wherein, in operation, RF signals are routed to one or more of the function-specific outputs according to which of the of selectable optical carrier signal wavelengths is enabled in the optical routing network.

A single multi-function array antenna implemented according to preferred embodiments of the present invention is expected to be less expensive to make than the alternative of providing dedicated antennas for each function. Use of a single antenna also helps to overcome limitations in availability of antenna sites on a given host, e.g. on a ship or an aircraft.

The range of frequencies over which preferred embodiments of the present may be used is generally defined in this patent application by the term "radio frequency". The radio frequency range typically extends from 0.5MHz to 300GHz. However, this frequency range applies in particular to the range of frequencies of operation of the types of array antenna to which the optical routing network of the present invention may typically be applied and is not intended to imply any particular limitations on the range of frequencies of signals that may be routed by means of the optical routing network itself, for example if were to be applied to other applications than array antennas.

Preferred embodiments of the present invention will now be described in more detail, by way of example only, with reference to the accompanying drawings of which:
Figure 1 is a diagram showing an eight channel portion of an optical subsystem and receiver section for a multi-function array antenna according to a preferred embodiment of the present invention; and
Figure 2 is a diagram showing a typical modular implementation of the system shown in Figure 1.

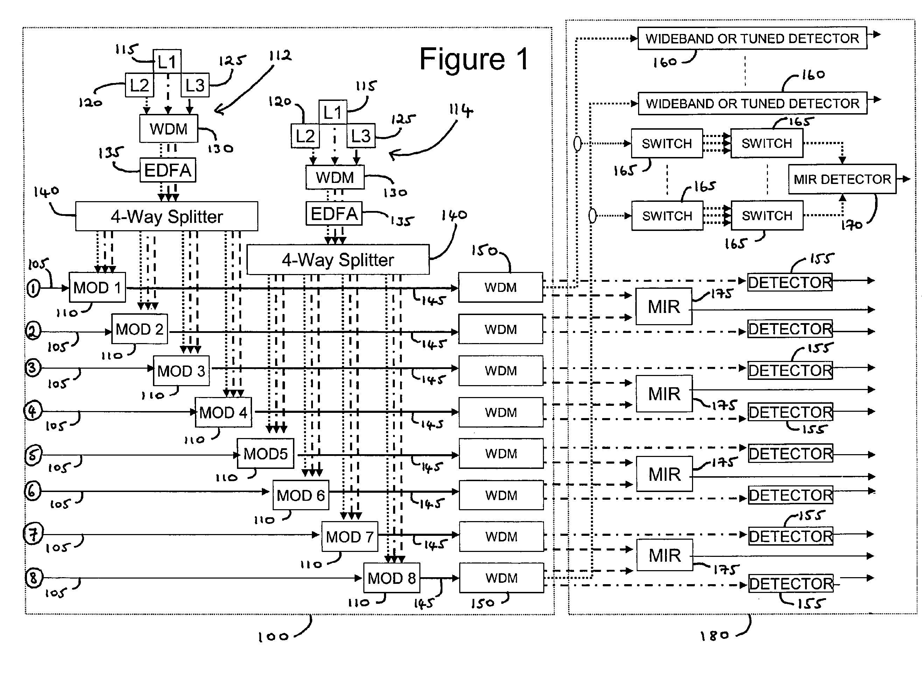

According to a first preferred embodiment of the present invention, an optical routing sub-system for directing signals for the receiving functions of an eight channel multi-function array antenna will now be described with reference to Figure 1. An eight channel sub-system has been chosen for this first preferred embodiment for convenience of illustration and it will be clear that the optical routing sub-system may be scaled to provide 16, 24 or 32 channels, for example, according to the functional requirements of the antenna.

Referring to Figure 1, a diagram is provided to illustrate the key components of an optical routing sub-system 100. The optical routing sub-system 100 is provided with eight inputs, labelled 1 to 8, for receiving radio frequency (RF) signals from elements of an array antenna (not shown in Figure 1) and for carrying the received RF signals over preferably equal lengths of transmission line 105 to the modulating signal inputs of respective opto-electronic modulators 110, labelled "MOD 1" to "MOD 8" in Figure 1. The opto-electronic modulators 110 may be of the Mach-Zehnder interferometer type, for example. The optical sub-system 100 comprises two optical driver units 112, 114, made using polarisation-maintaining optical fibres and devices, each optical driver unit 112, 114 being arranged to generate four optical carrier signals. Each optical driver unit is provided with three polarisation-maintaining lasers 115, 120, 125, labelled "L1" , "L2" and "L3" respectively according to the wavelength of light generated. Any one or more of the lasers 115, 120, 125 may be switched on to output light at any given time. Light output by one or more of the lasers 115, 120, 125 is input to a polarisation-maintaining wavelength division multiplexing (WDM) device 130, if necessary (more than one of the lasers 115, 120, 125 is producing light) to be combined to form a single optical carrier signal. The single optical carrier signal is amplified in a polarisation-maintaining erbium-doped fibre amplifier (EDFA) 135 and input to a polarisation-maintaining 4-way splitter 140 to create the four optical carrier signals. The four optical carrier signals from each splitter 140 are conveyed to the modulators 110 over polarisation-maintaining optical fibres.

A single optical driver unit may alternatively be provided having an 8-way optical splitter to generate eight optical carrier signals. However, the lower optical power levels resulting from use of an 8-way splitter may be not be sufficient in some applications and, furthermore, the flexibility in operating the modulators in separate groups of four would be lost, as will become clear below.

Each of the eight optical carrier signals, four provided by each optical driver unit 112, 114, is carried over a different optical fibre and input to an optical input of a respective one of the eight opto-electronic modulators 110. Each optical carrier signal may then be modulated in one of the opto-electronic modulators 110 by received RF signals.

For the purpose of showing that the optical carrier signals output by the optical driver units 112, 114 may comprise light of up to three different wavelengths, each optical carrier signal output by the 4-way splitters 140 is represented in Figure 1 by a group of three different types of line, each line type designating a different wavelength of light. The path followed by light of each wavelength through the apparatus in Figure 1 is thereby more clearly demonstrated.

The optical carrier signals output by each of the opto-electronic modulators 110, modulated by any received RF signals, are conveyed by different single mode optical fibres 145, preferably all of the same length, for input to respective wavelength division multiplexing (WDM) devices 150. The total length of RF transmission line 105 and optical fibre 145 is chosen so that the total path length between each input and the corresponding WDM device 150 is substantially equal. For beam-forming applications, the required accuracy of path length equalisation may be of the order of ±1mm. The WDM devices 150 are arranged to separate and/or direct the modulated optical carrier signals according to wavelength, in particular according to the three wavelengths of the lasers 115, 120, 125, so separating the modulated optical carrier signal into up to three constituent modulated carrier signals and outputting each constituent modulated carrier from a different output. The different outputs of the WDM devices 150 are connected in a predetermined, function-specific way to detectors (to retrieve the received RF signal from the respective modulated optical carrier) or to optical outputs of a multi-function receiver unit 180, as appropriate for the different functions of the antenna.

It will be clear that, in operation, RF signals received from an antenna over any one of the eight channel inputs (in this preferred embodiment) may be routed to a function-specific group of receivers simply by switching on a laser 115, 120, 125 generating light of the appropriately selected wavelength. The WDM devices 150 will route only the light of the selected wavelength to the intended function-specific group of detectors or outputs in the receiver unit 180. That is, if an optical carrier signal of the appropriate wavelength is input to the modulators 110, then the modulated signals will be directed through the optical routing sub-system 100 to the corresponding functional receivers/outputs.

Conventional laser switching techniques may be used to switch the lasers 115, 120, 125 on and off as required. If solid state lasers are used, for example, they may remain switched on and their output optical power may be controlled by means of an applied bias voltage. Rapid switching of the lasers 115, 120, 125 may be achieved by this technique, or for example by use of separate optical switches in place of the 4-way splitters 140, with switching times of the order of 10-100µs.

In the particular example shown in Figure 1, when the lasers "L1" 115 are switched on and emitting light, the eight received RF signals are routed to separate detectors 155 for a first antenna function, e.g. a surveillance and tracking function. When the lasers "L2" 120 are switched on and emitting light, the eight received RF signals are routed to separate wideband or tuned detectors 160. The signals are also routed to an array of switches 165 in a delay line arrangement, and a MIR Detector 170. When the lasers "L3" 125 are switched on and emitting light, pairs of RF signals are routed to multiple input receivers (MIR) 175, e.g. for a high resolution radar function. Of course, if only one laser 115, 120, 125 in one of the optical driver units 112, 114 is switched on, RF signals from only four of the eight antenna elements will be routed to detectors. Furthermore, if more than one laser 115, 120, 125 of a different wavelength is switched on, RF signals will be routed to detectors in respect of more than one function simultaneously.

Preferably, the lasers 115, 120, 125 are switched according to a time division multiplexing technique designed, for example, to satisfy the beam repointing times or time sharing requirements of each antenna function.

Whereas the system architecture according to this preferred embodiment of the present invention is based upon eight channels, it will be clear that a lesser or greater number of channels may be implemented for a typical multi-function array antenna according to the principles relied upon for this first preferred embodiment.

Preferably, the conversion efficiency of the opto-electronic modulators 110 may be maintained and the noise figures reduced by substantially optimising the linearity of the modulators 110. Linearity may be controlled using a bias controller as described in pending patent applications by the present Applicant, in particular in published international patent application WO 2008/059198 and in international patent application number PCT/GB2008/050453.

Whereas passive WDM devices 130, 150 have been used to combine and then to separate carrier signals of different wavelengths and hence to achieve a desired routing of modulated optical carriers, an optical routing sub-system to achieve similar routing functionality may be implemented using optical switches, for example magneto-optical switches, in place of the WDM devices 130, 150. In such a system, a single optical carrier wavelength may be used and a required routing for the modulated optical signals for each antenna element is achieved by switching the signals between outputs of each switch, so directing the signals to different function-specific detectors and outputs in a receiving unit. However, the insertion loss for multi-way optical switches is typically greater than for WDM devices, increasing with the number of outputs, and the isolation between signal paths provided by WDM devices can be greater than that achievable using switches. However, in some applications, these differences may not be significant and a switch-based architecture may provide an acceptable alternative, within the scope of the present invention.

A further variation on the architecture provided in Figure 1 is to use optical switches in place of the WDM devices 130 to select different wavelength optical carriers being output by the lasers 115, 120, 125, rather than combining optical carrier signals of different wavelengths into a single optical carrier in a WDM device 130. However, if more than one wavelength of optical carrier signal is required, for example to achieve simultaneous routing of RF signals for different functions, then a more complex arrangement of optical switches would be required in order to have the option of selecting more than one carrier signal, with a consequent increase in optical losses.

Further options for switching and supplying optical carriers of different wavelengths in the optical drivers 112, 114 would be apparent to a person of ordinary skill in the relevant art as alternative techniques to switching different wavelength lasers on and off.

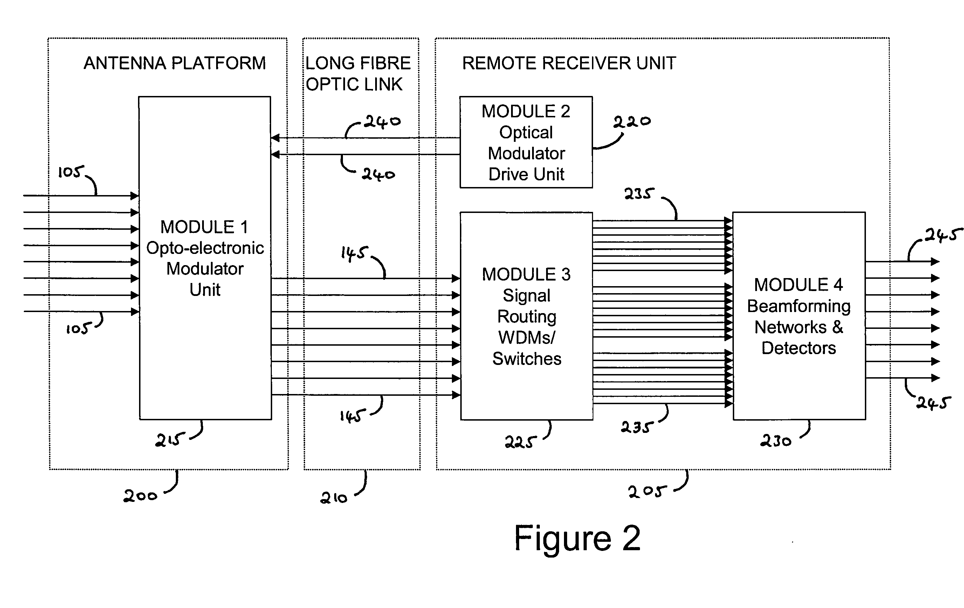

In a practical implementation of the system according to this preferred embodiment of the present invention, the system may be implemented as a number of separate modules which, by virtue of the optical fibre links, may be separated to locate the different modules according to space limitations and performance requirements. A preferred modular implementation of the apparatus illustrated in Figure 1 will now be described with reference to Figure 2 according to a second preferred embodiment of the present invention.

Referring to Figure 2, and additionally to Figure 1, a preferred modular architecture is shown to comprise three groups of equipment: an Antenna Platform 200, which may include the antenna elements themselves, but in general the equipment in this group will be located close to the antenna elements; a Remote Receiver Unit 205 comprising equipment which may be located remotely from the antenna itself, including function-specific detectors and beamforming networks; and a long fibre optic link 210 comprising fibre optic interconnecting cables 145, 240 for linking the remote receiver unit 205 to the antenna platform 200.

The antenna platform 200 comprises a module 215 ("MODULE 1 ") containing the opto-electronic modulators 110 of the optical routing sub-system 100 in Figure 1, together with the RF transmission line inputs 105 for connection to the antenna and optical output connectors for connection of the single mode optical fibres 145. The remote receiver unit 205 includes: a module 220 ("MODULE 2") containing the optical driver units 112, 114 for generating the optical carrier signals for input to "Module 1" 215 via optical fibres 240 in the fibre optic link 210; a module 225 ("MODULE 3") containing optical signal routing devices, in particular the WDM devices 150 or equivalent switches for performing wavelength-dependent or switched routing of modulated optical signals to function-specific equipment; and a module 230 ("MODULE 4") to which the "Module 3" 225 is linked by optical fibres 235. The "Module 4" 230 contains the function-specific equipment 180 of Figure 1, including the function-specific detectors and switches labelled 155 to 175 in Figure 1, and provides the function-specific outputs 245 from the multi-function antenna system according to this preferred embodiment of the present invention.

Whereas preferred embodiments of the present invention have been described in the context of receiving functions whereby signals are received by elements of an array antenna and routed to function-specific receiving equipment, the optical routing network of the present invention may also be implemented for use in routing signals between inputs connected to function-specific transmitting equipment and outputs linked to selected portions of an array antenna. Selection of those portions of the array antenna that are to receive the function-specific transmissions being input to the optical routing network is achieved in a preferred embodiment of the present invention by selecting the wavelength of an optical carrier signal from a number of selectable wavelengths in a similar manner to that described above in a first preferred embodiment of the present invention.

## Claims

1. An optical routing network for a multi-function antenna, comprising:
at least one input for receiving radio frequency (RF) signals;
modulation means comprising at least one opto-electronic modulator linked to said at least one input;
an optical driver linked to said modulation means for generating an optical carrier signal comprising light of one or more of a plurality of different selectable wavelengths; and
optical routing means for receiving modulated optical carrier signals output by said modulation means and for directing modulated light in said modulated signals to one of a plurality of function-specific optical outputs.

2. The optical routing network according to claim 1, wherein said optical routing means comprise wavelength division demultiplexing means for separately directing modulated light in said modulated optical carrier signals to a different one of said plurality of function-specific optical outputs for each of said one or more selectable wavelengths of light comprised in the optical carrier signal.

3. The optical routing network according to claim 1 or claim 2, further comprising a plurality of said inputs each linked to a different respective opto-electronic modulator of said modulation means for modulating said optical carrier signal using RF signals received at the input.

4. The optical routing network according to claim 3, wherein said wavelength division demultiplexing means comprise a plurality of wavelength division demultiplexers, each linked to a respective one of said opto-electronic modulators and each having a plurality of function-specific optical outputs.

5. The optical routing network according to any one of claims 1 to 4, wherein said optical driver comprises a plurality of switchable lasers each arranged to output light of a different one of said plurality of selectable wavelengths, and combining means for combining light from two or more of said plurality of lasers to form said optical carrier signal.

6. The optical routing network according to claim 5, wherein said combining means comprise wavelength division multiplexing means.

7. The optical routing network according to claim 4, wherein said optical driver comprises a plurality of lasers each arranged to output light of a different wavelength, and optical switching means for selecting light from one or more of said plurality of lasers to form said optical carrier signal.

8. The optical routing network according to claim 4, wherein said optical driver comprises a tuneable laser operable to output light at any one of said plurality of selectable wavelengths to form said optical carrier signal.

9. The optical routing network according to claim 1, wherein said optical routing means comprise at least one optical switch, linked to said at least one opto-electronic modulator and having a plurality of optical outputs, operable to direct received modulated optical signals to a selected one of said plurality of optical outputs.

10. A method for routing RF signals between elements of a multi-function array antenna and function-specific equipment in respect of transmitting or receiving functions of the antenna, comprising the steps of:
(i) generating an optical carrier using light of one or more selectable wavelengths;
(ii) modulating the optical carrier with a received RF signal; and
(iii) routing modulated light in the modulated optical carrier to one or more function-specific outputs according to the selected wavelength, wherein each output relates to a different function of the antenna.

11. The method according to claim 10, wherein at step (i) the optical carrier comprises light of a plurality of selected wavelengths combined to form the optical carrier using wavelength division multiplexing and, at step (iii), the modulated optical carrier is separated into modulated carriers at each of the plurality of selected wavelengths for routing to respective function-specific outputs using wavelength division demultiplexing.

12. The method according to claim 10 or claim 11, wherein said RF signals comprise signals received by elements of the array antenna and said function-specific outputs are linked to function-specific receiving equipment.

13. The method according to claim 10 or claim 11, wherein said RF signals comprise signals output by function-specific transmitting equipment and said function-specific outputs are linked to elements of the array antenna.

14. A multi-function array antenna having an optical routing network according to any one of claims 1 to 9 for directing RF signals received from elements of the antenna to function-specific outputs, wherein, in operation, said RF signals are routed to one or more of the function-specific outputs according to which of the of selectable optical carrier signal wavelengths is enabled in the optical routing network.

15. A multi-function array antenna having an optical routing network according to any one of claims 1 to 9 for directing RF signals received from function-specific transmitting equipment to function-specific outputs linked to elements of the antenna, wherein, in operation, said RF signals are routed to one or more of the function-specific outputs according to which of the of selectable optical carrier signal wavelengths is enabled in the optical routing network.
